(19) Europäisches Patentamt / European Patent Office / Office européen des brevets

(11) **EP 2 905 778 B1**

(12) **EUROPEAN PATENT SPECIFICATION**

(45) Date of publication and mention
of the grant of the patent:
**09.05.2018 Bulletin 2018/19**

(21) Application number: **13845843.5**

(22) Date of filing: **04.06.2013**

(51) Int Cl.:
***H04M 9/08*** *(2006.01)*

(86) International application number:
**PCT/CN2013/076685**

(87) International publication number:
**WO 2014/056328 (17.04.2014 Gazette 2014/16)**

(54) **ECHO CANCELLATION METHOD AND DEVICE**

ECHOUNTERDRÜCKUNGSVERFAHREN UND -VORRICHTUNG

PROCÉDÉ ET DISPOSITIF D'ÉLIMINATION D'ÉCHO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2012 CN 201210387313**

(43) Date of publication of application:
**12.08.2015 Bulletin 2015/33**

(73) Proprietor: **Huawei Technologies Co., Ltd.
Longgang District
Shenzhen, Guangdong 518129 (CN)**

(72) Inventor: **ZHAN, Wuzhou
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2009/151062    WO-A1-2011/105006
CN-A- 1 805 011    CN-A- 101 778 183
CN-A- 102 379 004    JP-A- 2003 284 184
US-A1- 2006 098 810**

**Description**

**TECHNICAL FIELD**

The present invention relates to the audio signal processing field, and in particular, to an echo cancelation method and device.

**BACKGROUND**

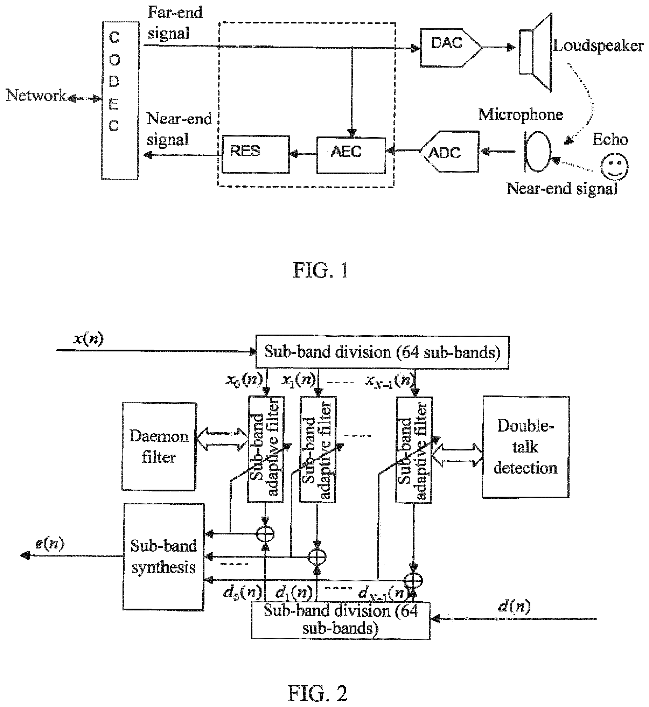

FIG. 1 is a schematic diagram of an application scenario of an echo cancelation technology. A far-end signal transmitted from a network passes through a CODEC, that is, the far-end signal is decoded by a CODEC module for analogy-to-digital conversion, and then is sent to a loudspeaker for playing. A microphone collects a near-end signal, and at the same time collects the far-end signal (namely, an echo) played by the loudspeaker. After echo cancelation processing is performed on signals collected by the microphone, echoes in the signals collected by the microphone are canceled, and only the near-end signal is left. The near-end signal is coded by the CODEC module and then is sent to a far end via the network. If the echoes in the signals collected by the microphone are not canceled, after the signals are sent to the far end, the far end hears a sound of its own. A purpose of the echo cancelation technology is to cancel echoes as much as possible, and reserve the near-end signal.

Echo cancelation processing generally includes two parts: AEC (Adaptive Echo Canceller) adaptive echo cancelation and RES (Residual Echo Suppressor) residual echo suppression. In the adaptive echo cancelation, an adaptive filter is used to simulate a spatial echo path, and cancel the echoes in the signals collected by the microphone. Generally, due to impact of factors such as noise, an AEC module cannot completely cancel the echoes, and therefore an RES module needs to further perform echo suppression processing on a residual echo. Adaptive filtering has such algorithms as: NLMS, RLS and MDF (Multidelay block frequency domain adaptive filter) algorithm, where the MDF algorithm is an implementation form of the NLMS algorithm in a frequency domain. When a reverberation time is relatively long and a sampling rate is relatively high, an adaptive filter needs a very long order. For example, when the reverberation time is 300 ms and the sampling rate is 48 khz, a required order is $48000 \times 0.3 = 14400$; as a result, a calculation amount of the adaptive filter is great, thereby increasing a device cost. The present invention provides an echo cancelation algorithm of low complexity.

In the prior art, to reduce complexity, adaptive sub-band filtering is used to solve the problem. As shown in FIG. 2, sub-band division is performed separately for a near-end signal $d(n)$ and a far-end signal $x(n)$, and a bandwidth of each sub-band is 250 Hz; therefore, for 8 KHz, there are 16 sub-bands in total; for 16 KHz, there are 32 sub-bands in total; for 32 KHz, there are 64 sub-bands in total. Echo cancelation is performed for each sub-band by using the NLMS algorithm, and integration is performed for the sub-bands to obtain a residual echo signal.

However, in the prior art, at least the following problem exists:
Echo leakage exists on sub-band edges. It is found by debugging that an echo attenuation amount of a sub-band adaptive filter is obviously insufficient on the sub-band edges, and a strong single-frequency signal (which sounds like a bang, and relatively affects a subjective feeling) is usually left.

US 2006/098810 A1 discloses an acoustic echo canceller (AEC) apparatus which cancels an echo signal input to a microphone in a mobile terminal. In the AEC apparatus, a first analysis filter bank divides a signal received from the microphone into a plurality of subband signals, and classifies the subband signals into high-band signals and low-band signals according to a predetermined reference.

**SUMMARY**

In view of this, it is necessary to provide an echo cancelation method and device, so as to solve the foregoing problem.

The present invention provides a method according to claim 1, an AEC module according to claim 10 and an RES module according to claim 11.

An embodiment of the present invention provides an echo cancelation method, and the method includes:

dividing a to-be-processed audio signal into a to-be-processed high-band audio signal and a to-be-processed low-band audio signal;
performing, by using an AEC module, adaptive filtering echo cancelation processing on the to-be-processed low-band audio signal; and
performing, by using an RES module, envelope prediction echo suppression on the to-be-processed high-band audio signal, performing echo suppression on the to-be-processed low-band audio signal, and outputting a signal after processing.

By using the method, not only a calculation amount in echo cancelation is effectively reduced, but also a problem of echo leakage existing on sub-band edges is solved.

In addition, an embodiment of the present invention provides an AEC module for echo cancelation, including:

a reference signal analysis filter, configured to process a reference signal into a high-band reference signal and a low-band reference signal, output the high-band reference signal to an artificial echo synthesis filter, and output the low-band reference signal to an adaptive filter;

a to-be-processed audio signal analysis filter, configured to process a to-be-processed audio signal into a to-be-processed high-band audio signal and a to-be-processed low-band audio signal, output the to-be-processed high-band audio signal to a preliminary echo cancelation signal synthesis filter, and output the to-be-processed low-band audio signal to the adaptive filter;

the adaptive filter, connected to the reference signal analysis filter and the to-be-processed audio signal analysis filter, and configured to perform adaptive filtering processing on the low-band reference signal to generate a low-band artificial echo signal, and output the low-band artificial echo signal to the artificial echo synthesis filter; perform adaptive filtering processing on the to-be-processed low-band audio signal to generate a low-band preliminary echo cancelation signal, and output the low-band preliminary echo cancelation signal to the preliminary echo cancelation signal synthesis filter;

the artificial echo synthesis filter, connected to the adaptive filter and configured to synthesize the high-band reference signal and the low-band artificial echo signal into an artificial echo signal, and output the artificial echo signal to an RES module; and

the preliminary echo cancelation signal synthesis filter, connected to the adaptive filter and configured to synthesize the to-be-processed high-band audio signal and the low-band preliminary echo cancelation signal into a preliminary echo cancelation signal, and output the preliminary echo cancelation signal to the RES module.

In addition, an embodiment of the present invention further provides an RES module for echo cancelation, including:

an FFT transformation module, configured to perform FFT transformation on a reference signal, a to-be-processed audio signal, an artificial echo signal, and a preliminary echo cancelation signal, to generate a reference frequency domain signal, a to-be-processed frequency domain audio signal, an artificial echo frequency domain signal, and a preliminary echo cancelation frequency domain signal, respectively; and input the to-be-processed frequency domain audio signal, the artificial echo frequency domain signal, and the preliminary echo cancelation frequency domain signal to an RES low-band module, and input the reference frequency domain signal and the preliminary echo cancelation frequency domain signal to an RES high-band module;

the RES high-band module, configured to perform envelope prediction echo suppression on a high-band signal in the preliminary echo cancelation frequency domain signal, and calculate and output a residual echo suppression coefficient; and

the RES low-band module, configured to perform echo suppression on a low-band signal in the preliminary echo cancelation frequency domain signal, and output a processing result.

The device not only effectively reduces a calculation amount in echo cancelation, but also solves a problem of echo leakage existing on sub-band edges.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.

FIG. 1 is a flowchart of a method in the background of the present invention;
FIG. 2 is a flowchart of a method in the prior art in the background of the present invention;
FIG. 3 is a structural diagram of a device according to Embodiment 1 of the present invention;
FIG. 4 is a flowchart of a method according to Embodiment 1 of the present invention;
FIG. 5 is a flowchart of a method according to Embodiment 1 of the present invention;
FIG. 6 is a flowchart of a method according to Embodiment 1 of the present invention;
FIG. 7 is a reference diagram of a sub-band division manner according to Embodiment 1 of the present invention;

FIG. 8 is an exemplary diagram of an echo impulse response and an energy decay curve according to Embodiment 1 of the present invention; and

FIG. 9 is a flowchart of Quadrature Mirror Filter (QMF) analysis and processing by a synthesis filter according to Embodiment 1 of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

An embodiment of the present invention provides an echo cancelation method, so as to cancel an echo in a to-be-processed audio signal and output a signal of which echoes are canceled.

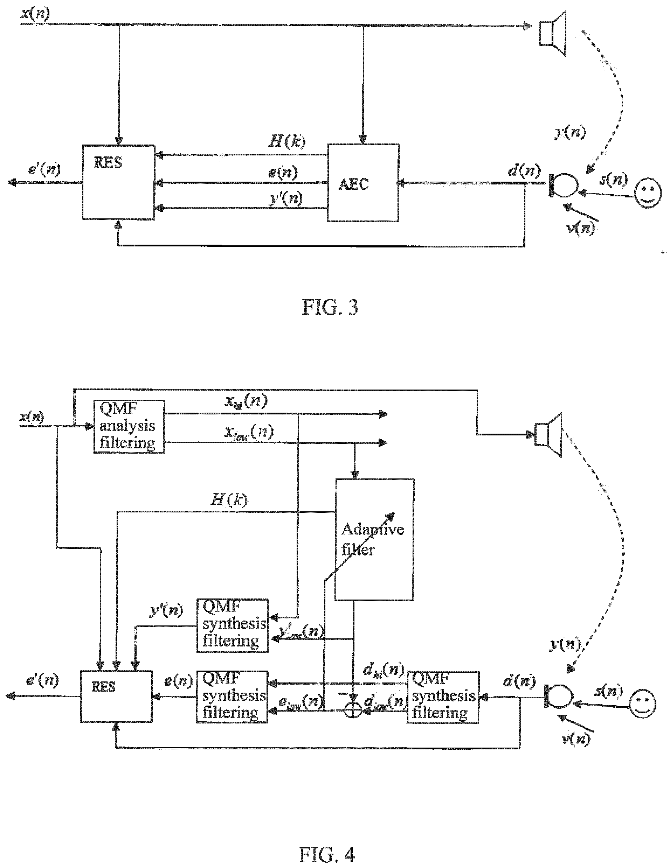

Referring to FIG. 3, a reference signal $x(n)$ (namely, a far-end signal, where the reference signal and the far-end signal have a same meaning in this disclosure) is output to a loudspeaker for playing; a microphone collects a to-be-processed audio signal $d(n)$, where the to-be-processed audio signal includes an echo signal $y(n)$, a local-end signal $s(n)$ and a noise $v(n)$; the to-be-processed audio signal is processed by using an AEC module and an RES module to cancel the echo signal $y(n)$ and the noise $v(n)$ and to reserve the local-end signal. Specifically, referring to FIG. 4, the method includes the following steps:

S1: An AEC module performs preliminary echo cancelation processing on a to-be-processed audio signal, and generates a preliminary echo cancelation signal $e(n)$.

The AEC module processes a reference signal $x(n)$ and the to-be-processed audio signal $d(n)$, outputs the preliminary echo cancelation signal $e(n)$, an artificial echo signal $y'(n)$, and a low-band echo filtering coefficient $H(k)$ of a frequency domain; and outputs the reference signal $x(n)$ and the to-be-processed audio signal $d(n)$ to an RES module. Specifically, the step includes:

1. Generate an artificial echo signal $y'(n)$ according to a reference signal $x(n)$.
After the reference signal $x(n)$ is processed by a QMF analysis filter, a high-band reference signal $x_{hi}(n)$ and a low-band reference signal $x_{low}(n)$ are generated; the high-band reference signal $x_{xi}(n)$ is output to a QMF synthesis filter and the low-band reference signal $x_{low}(n)$ is output to an adaptive filter.
After the low-band reference signal $x_{low}(n)$ is processed by the adaptive filter, a low-band artificial echo signal $y'_{low}(n)$ is generated, and is output to the QMF synthesis filter.
After the high-band reference signal $x_{hi}(n)$ and the low-band artificial echo signal $y'_{low}(n)$ are processed by the QMF synthesis filter, the artificial echo signal $y'(n)$ is generated, and is output to an RES module.
2. Generate the preliminary echo cancelation signal $e(n)$ according to the to-be-processed audio signal $d(n)$.
After the to-be-processed audio signal $d(n)$ is processed by the QMF synthesis filter, a to-be-processed high-band audio signal $d_{hi}(n)$ and a to-be-processed low-band audio signal $d_{low}(n)$ are generated; the to-be-processed high-band audio signal $d_{hi}(n)$ is output to the QMF synthesis filter.
The low-band artificial echo signal $y'_{low}(n)$ is subtracted from the to-be-processed low-band audio signal $d_{low}(n)$, to obtain a low-band preliminary echo cancelation signal $e_{low}(n)$, and the low-band preliminary echo cancelation signal $e_{low}(n)$ is output to the QMF synthesis filter.
After the to-be-processed high-band audio signal $d_{hi}(n)$ and the low-band preliminary echo cancelation signal $e_{low}(n)$ are processed by the QMF synthesis filter, the preliminary echo cancelation signal $e(n)$ is generated, and is output to the RES module.
3. Obtain the low-band echo filtering coefficient $H(k)$ of the frequency domain by calculation by the adaptive filter in a process of processing the low-band reference signal.

In addition, the AEC module further outputs the reference signal $x(n)$ and the to-be-processed audio signal $d(n)$ to the RES module, where the reference signal $x(n)$ and the to-be-processed audio signal $d(n)$ are used as ancillary signals for the RES module to perform further echo cancelation processing.

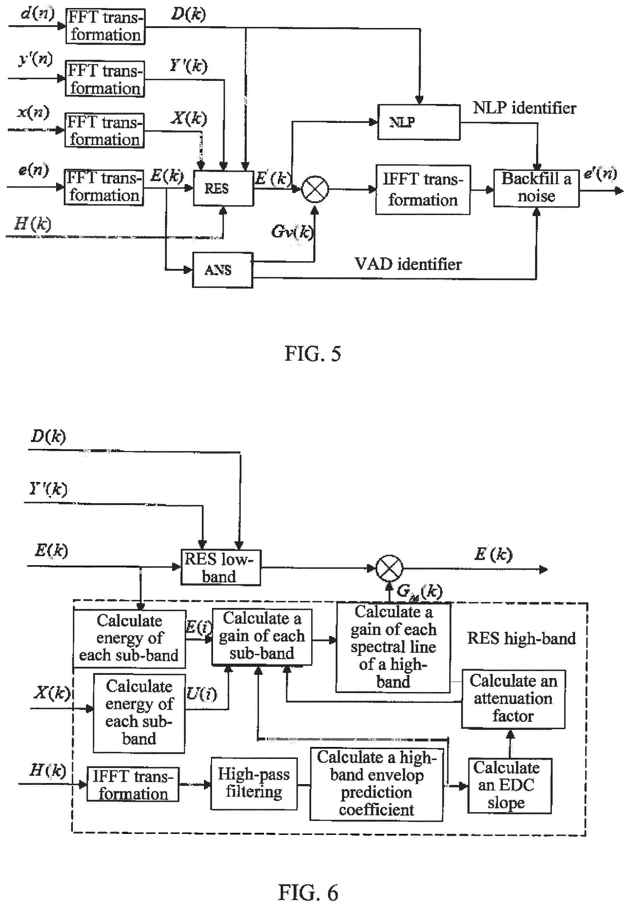

S2: An RES module further performs echo cancelation processing on the preliminary echo cancelation signal $e(n)$, and generates a signal of which echoes are canceled, referring to FIG. 5.

S201: The RES module performs fast Fourier transformation (FFT, Fast Fourier Transformation) separately on the reference signal $x(n)$, the to-be-processed audio signal $d(n)$, the artificial echo signal $y'(n)$, and the preliminary echo cancelation signal $e(n)$, to generate a corresponding reference frequency domain signal $X(k)$, a to-be-processed frequency domain audio signal $D(k)$, an artificial echo frequency domain signal $Y'(k)$, and a preliminary echo cancelation frequency domain signal $E(k)$, respectively; inputs the to-be-processed frequency domain audio signal $D(k)$, the artificial echo frequency domain signal $Y'(k)$, and a residual frequency domain echo signal $E(k)$ to an RES low-band module, and inputs the reference frequency domain signal $X(k)$, the low-band echo filtering coefficient $H(k)$, and the preliminary echo cancelation frequency domain signal $E(k)$ to an RES high-band module.

S203: The RES high-band module performs envelope prediction echo suppression on a high-band signal in the preliminary echo cancelation frequency domain signal $E(k)$ (a high-band signal for short), and calculates and outputs a residual echo suppression coefficient $G_{he}(k)$; the RES low-band module performs echo suppression by using an existing echo suppression technology on a low-band signal in the preliminary echo cancelation frequency domain signal $E(k)$ (a low-band signal for short), and outputs a processing result, referring to FIG. 6.

It should be noted that, to eliminate an aliasing effect, the high-band signal and the low-band signal overlap. If there are 512 spectral lines, the RES low-band module performs residual echo suppression on spectral lines 1 to 263, and the RES high-band module performs suppression on spectral lines 231 to 512; therefore, 32 spectral lines overlap in total.

1. A process of calculating the residual echo suppression coefficient by the RES high-band module is as follows: calculating a gain of each sub-band according to energy E(i) of each sub-band of the preliminary echo cancelation frequency domain signal $E(k)$, energy $U(i)$ of each sub-band of the reference frequency domain signal $X(k)$, energy $\tilde{E}(i)$ of each sub-band of a residual echo frequency domain signal, a high-band envelope prediction coefficient $g_l(i)$, and an attenuation factor of the high-band envelope prediction coefficient; and calculating a gain $G_{he}(k)$ of each spectral line of the high band, namely, a residual echo coefficient, according to the gain of each sub-band. Specifically, the process includes:

(1) Calculate the energy $E(i)$ of each sub-band of the preliminary echo cancelation frequency domain signal $E(k)$, the energy $U(i)$ of each sub-band of the reference frequency domain signal $X(k)$, the energy $\tilde{E}(i)$ of each sub-band of the residual echo frequency domain signal, the high-band envelope prediction coefficient $g_l(i)$, and the attenuation factor factor of the high-band envelope prediction coefficient.

A. The RES high-band module estimates an echo of the high band by using an envelope prediction method, and then performs suppression. The so-called envelope prediction is a manner of estimating, without considering an effect of a phase, energy of an echo of a current frame by using energy of a reference signal of several previous frames in the frequency domain, which is shown in the following formula:

$$\widetilde{E}(i) = \sum_{l=0}^{L-1} g_l(i) U_{-l}(i) \tag{1}$$

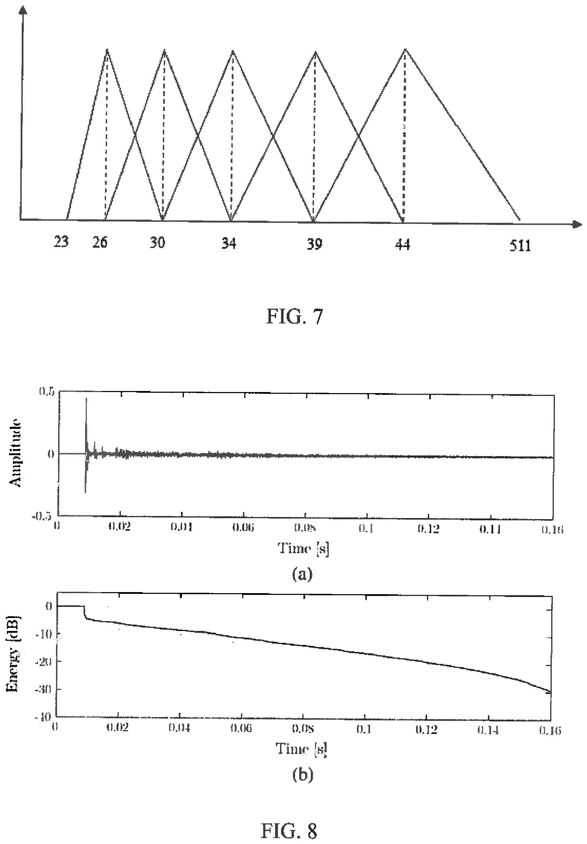

In the formula, i represents a serial number of a divided sub-band in the frequency domain, and L is a quantity of frames used for the envelope prediction; $g_l(i)$ represents the first coefficient of the ith sub-band, and $U_{-l}(i)$ represents energy of the ith sub-band of the first frame in the reference frequency domain signal $X(k)$. When a quantity of spectral lines is 512, for a sub-band division manner of the high-band RES, reference is made to FIG. 7, where there are 5 sub-bands in total, and the sub-bands overlap in a triangular window manner.

It should be noted that, in this embodiment, the sub-bands overlap in the triangular window manner, to which it is not limited, and the sub-bands may also overlap in a sine window or rectangle window manner. $\tilde{E}(i)$ represents energy, estimated for the ith sub-band, of a residual echo frequency domain signal. As described above, the to-be-processed audio signal $d(n)$ includes three parts: the echo signal $y(n)$, the local-end signal $s(n)$, and the noise $v(n)$. After the AEC module performs preliminary echo cancelation processing on the to-be-processed audio signal $d(n)$, the preliminary echo cancelation signal $e(n)$ is generated. After FFT transformation is performed on the signal, the preliminary echo cancelation frequency domain signal $E(k)$ is generated. Therefore, the preliminary echo cancelation frequency domain signal $E(k)$ also includes three parts: the residual echo frequency domain signal, a local-end frequency domain signal, and a noise frequency domain signal.

B. A formula for calculating $U(i)$ is as follows:

$$U(i) = \sum_{k=kl(i)}^{kh(i)} w_k(i)\left|X(k)\right|^2 \tag{2}$$

In the formula, $kl(i)$ represents a start frequency of the $i^{th}$ sub-band, $kh(i)$ represents an end frequency of the $i^{th}$ sub-band, and $w_k(i)$ represents a weight coefficient of each frequency. If $kc(i)$ is a central frequency of the $i^{th}$ sub-band, a value of $w_k(i)$ is calculated by using the following formula:

$$\begin{cases} w_k(i) = \dfrac{(k - kl(i))}{(kc(i) - kl(i))} & \mathrm{k} >= kl(i) \,\&\,\&\mathrm{k} <= kc(i) \\[4mm] w_k(i) = 1 - \dfrac{(k - kc(i))}{(kh(i) - kc(i))} & \mathrm{k} > kc(i) \,\&\,\&\mathrm{k} <= kh(i) \end{cases} \tag{3}$$

where, a value of $kl(i)$ is $kc(i-1)$, and a value of $kh(i)$ is $kc(i+1)$ ; by using these values, a smooth effect of a sound can be enhanced.

In the foregoing manner of calculating $U(i)$, energy of each sub-band of the preliminary echo cancelation frequency domain signal $E(k)$ may be calculated:

$$E(i) = \sum_{k=kl(i)}^{kh(i)} w_k(i)\left|E(k)\right|^2 \tag{4}$$

C. If an echo impulse response $h_n(i)$ of each sub-band is known, the envelope prediction coefficient $g_l(i)$ may be calculated as follows:

$$g_l(i) = \sum_{n=l*N}^{l*N+N-1} h_n(i) * h_n(i) \tag{5}$$

In the formula, N represents a frame length. Because only the low-band echo filtering coefficient $H(k)$ can be obtained, a high-band filtering coefficient can only be approximated by using the low-band echo filtering coefficient. A specific implementation method is: performing IFFT transformation on $H(k)$ to obtain a low-band impulse response of a time domain, and then performing high-pass filtering to obtain a high sub-band impulse response $h0_n$; then, calculating the envelope prediction coefficient by using the following formula:

$$g_l(i) = \sum_{n=l*N}^{l*N+N-1} h0_n * h0_n \tag{6}$$

It may be seen from the foregoing formula that each sub-band of the high band uses a same envelope prediction coefficient.

D. An attenuation factor factor of the envelope prediction coefficient is calculated.

FIG. 8 is an example of an echo impulse response and an energy decay curve (EDC).

It may be seen that the EDC is basically linear in a middle part. The EDC is defined as:

$$EDC(i) = 10 * \log 10 \left( \sum_{n=i}^{L*N} h_n * h_n \right) \quad (7)$$

where i represents a time point; if an impulse response is divided into L frames, the EDC of each frame is calculated as follows:

$$EDC(l) = 10 * \log 10 \left( \sum_{n=l*N}^{L*N} h_n * h_n \right)$$

$$= 10 * \log 10 \left( \sum_{m=l}^{L} g_m \right) \quad (8)$$

for a frame EDC, an EDC slope means an EDC difference between adjacent frames, that is:

$$q = EDC(l) - EDC(l-1) \quad (9)$$

where q is the EDC slope. Therefore,

$$q = 10 * \log 10 \left( \sum_{m=l}^{L} g_m \right) - 10 * \log 10 \left( \sum_{m=l-1}^{L} g_m \right)$$

$$= 10 * \log 10 \left( \frac{\sum_{m=l}^{L} g_m}{\sum_{m=l-1}^{L} g_m} \right)$$

$$\approx 10 * \log 10 \left( \frac{\sum_{m=l}^{\infty} g_m}{\sum_{m=l-1}^{\infty} g_m} \right) \quad (10)$$

The attenuation factor of the envelope prediction coefficient between the adjacent frames is:

$$factor = g_m / g_{m-1} \quad (11)$$

then,

$$q = 10 * \log 10(factor)$$

$$factor = 10^{q/10} \quad (12)$$

In this way, the attenuation factor of the envelope prediction coefficient can be calculated by calculating the slope q of the EDC. The slope of the EDC may be calculated by using a linear recurrence method. It may be seen that, except initial tens of milliseconds belonging to an early-stage echo, the EDC is linear, that is, the attenuation factor of the envelope prediction coefficient is a fixed value. A relatively large quantity of frames are used when an echo is estimated by using the envelope prediction coefficient. For example, if an echo tail lasts for 256 ms and a length of each frame is 8 ms, 32 frames are required; as a result, a larger storage space and calculation amount are required, while by using a feature that the attenuation factor is a fixed value, the storage space and calculation amount may be reduced. A specific method is as follows:

$$\widetilde{E}(i) = \sum_{l=0}^{l0} g_l(i)U_{-l}(i) + \sum_{l=l0+1}^{L-1} g_l(i)U_{-l}(i)$$

$$= \sum_{l=0}^{l0} g_l(i)U_{-l}(i) + \widetilde{E}_{r,m}(i)$$

$$(13)$$

In the formula, a value of $l0$ is 7, that is, the first 8 frames (64 ms) are considered as the early-stage echo, and echoes following the first 8 frames are considered as a later-stage echo. The later-stage echo is represented by $\widetilde{E}_{r,m}(i)$, where m represents a current frame and r represents the later-stage echo. By using a formula *factor* $= g_l/g_{l-1}$, an approximate estimation manner of $\widetilde{E}_{r,m}(i)$ may be obtained:

$$\widetilde{E}_{r,m}(i) = \sum_{l=l0+1}^{L-1} g_l(i)U_{-l}(i)$$

$$\approx \sum_{l=l0+1}^{\infty} g_l(i)U_{-l}(i)$$

$$= \sum_{l=l0+2}^{\infty} g_l(i)U_{-l}(i) + g_{l0+1}(i)U_{-l0-1}(i)$$

$$= factor * \sum_{l=l0+2}^{\infty} g_{l-1}(i)U_{-l}(i) + g_{l0+1}(i)U_{-l0-1}(i)$$

$$= factor * \sum_{l=l0+1}^{\infty} g_l(i)U_{-l-1}(i) + g_{l0+1}(i)U_{-l0-1}(i)$$

$$= \widetilde{E}_{r,m-1}(i) * factor + g_{l0+1}(i)U_{-l0-1}(i)$$

$$(14)$$

(2) Calculate a gain of each sub-band. The gain of each sub-band is calculated by using the following formulas:

$$\widetilde{E}_{db}(i) = 10 * \log 10\left(\widetilde{E}(i)\right)_{(15)}$$

where $\tilde{E}_{db}(i)$ is a decibel value of $\tilde{E}(i)$ ;

$$E_{db}(i) = 10 * \log 10 \big(E(i)\big) \quad (16)$$

$E_{db}(i)$ where $E_{db}(i)$ is a decibel value of $E(i)$; and

$$\begin{cases} G(i) = 0.1 , & E_{db}(i) - \tilde{E}_{db}(i) <= 0 \\ G(i) = \big(E_{db}(i) - \tilde{E}_{db}(i)\big) * (1 - 0.1)/10 + 0.1 , \\ & (E_{db}(i) - \tilde{E}_{db}(i) > 0) \& (E_{db}(i) - \tilde{E}_{db}(i) < 10) \\ G(i) = 1 , & E_{db}(i) - \tilde{E}_{db}(i) >= 10 \end{cases} \quad (17)$$

In the foregoing formula, $G(i)$ represents the gain of each sub-band; $E_{db}(i)$-$\tilde{E}_{db}(i) <= 0$ represents that an estimated echo is louder than an original echo; in this case, a lower limit 0.1 is used as the gain of the sub-band; $E_{db}(i)$ - $\tilde{E}_{db}(i) >= 10$ represents that the original echo is 10 DB louder than the estimated echo, where, in this case, it may be basically considered that no echo exists in signals collected by a microphone, and an upper limit 1 is used as the gain of the sub-band; $(E_{db}(i) - \tilde{E}_{db}(i) > 0) \& (E_{db}(i) - \tilde{E}_{db}(i) < 10)$ represents that the original echo is 0 DB to 10 DB louder than the estimated echo, where, in this case, a value of the gain of the sub-band ranges from 0.1 to 1, and is in direct proportion to a DB difference of $(E_{db}(i) - \tilde{E}_{db}(i))$.

(3) After calculating the gain of the sub-band, obtain a gain $G_{he}(k)$ of each spectral line of a high band, that is, a residual echo suppression coefficient can be obtained by using gain interpolation between adjacent sub-bands.

$$G(k) = w_k(i)G(i) + w_k(i-1)G(i-1) \quad (18)$$

where $w_k(i)$ is a coefficient used in the calculation of the energy of each sub-band in the foregoing.

S205: Multiply a result output by the RES low-band module and the residual echo suppression coefficient output by the RES high-band module, to obtain and output a signal $E'(k)$ of which echoes are canceled.

S207: Perform inverse fast Fourier transformation (IFFT, Inverse Fast Fourier Transformation) on the signal $E'(k)$ of which the echoes are canceled, then backfill a noise, and output a final processed signal.

It should be noted that a noise backfill module determines, according to an Non-linear Processing (NLP) identifier, whether a current frame is a residual echo; if yes, backfills a noise; otherwise, determines a Voice Activity Detection (VAD) identifier; if the current frame is the noise, stores a noise signal in a noise buffer area.

In the embodiment of the present invention, a signal is divided into a high-band signal and a low-band signal, an existing echo cancelation algorithm is used for the low-band signal, and an envelope prediction echo suppression algorithm is used for the high-band signal, thereby achieving an effect of greatly reducing calculation complexity, and at the same time avoiding a problem of echo leakage on sub-band adaptive filtering edges.

In addition, an embodiment of the present invention provides an AEC module for echo cancelation, including:

a reference signal analysis filter, configured to process a reference signal into a high-band reference signal and a low-band reference signal, output the high-band reference signal to an artificial echo synthesis filter, and output the low-band reference signal to an adaptive filter;

a to-be-processed audio signal analysis filter, configured to process a to-be-processed audio signal into a to-be-processed high-band audio signal and a to-be-processed low-band audio signal, output the to-be-processed high-band audio signal to a preliminary echo cancelation signal synthesis filter, and output the to-be-processed low-band audio signal to the adaptive filter;

the adaptive filter, connected to the reference signal analysis filter and the to-be-processed audio signal analysis filter, and configured to perform adaptive filtering processing on the low-band reference signal to generate a low-band artificial echo signal, and output the low-band artificial echo signal to the artificial echo synthesis filter; and perform adaptive filtering processing on the to-be-processed low-band audio signal to generate a low-band preliminary echo cancelation signal, and output the low-band preliminary echo cancelation signal to the preliminary echo cancelation signal synthesis filter;

the artificial echo synthesis filter, connected to the adaptive filter and configured to synthesize the high-band reference signal and the low-band artificial echo signal into an artificial echo signal, and output the artificial echo signal to an RES module; and

the preliminary echo cancelation signal synthesis filter, connected to the adaptive filter and configured to synthesize the to-be-processed high-band audio signal and the low-band preliminary echo cancelation signal into a preliminary echo cancelation signal, and output the preliminary echo cancelation signal to the RES module.

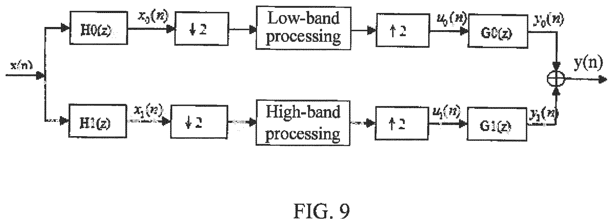

It should be noted that a process of QMF analysis and processing by a synthesis filter is shown in FIG. 9. After an input signal $x(n)$ is filtered by a low-pass filter H0(z) and a high-pass filter H1(z), two-fold downsampling is performed, and then low-band processing and high-band processing are performed separately; then, two-fold upsampling is performed separately, and synthesis filters F0(z) and F1(z) perform filtering; a synthesized signal y(n) is output after adding up. To eliminate aliasing, the filters are subject to the following limitation:

$$H1(z)=H0(-z)$$

$$G0(z)=2*H1(-z)=2*H0(z)$$

$$G1(z)=-2*H1(-z)=-2*H0(z)$$

In a time domain, h0(i)=h(i), i=0,1...N-1, where N is a length of the filter; then:

$$h1(i)=(-1)^i h(i)$$

$$g0(i)=2h(i)$$

$$g1(i)=-2*(-1)^i h(i)$$

Therefore, during design of the filter, only the low-pass analysis filter needs to be designed, and other filters may be obtained according to the low-pass analysis filter with reference to the foregoing parameters.

In addition, an embodiment of the present invention further provides an RES module for echo cancelation, including:

an FFT transformation module, configured to perform FFT transformation on a reference signal, a to-be-processed audio signal, an artificial echo signal, and a preliminary echo cancelation signal, to generate a reference frequency domain signal, a to-be-processed frequency domain audio signal, an artificial echo frequency domain signal, and a preliminary echo cancelation frequency domain signal, respectively; and input the to-be-processed frequency domain audio signal, the artificial echo frequency domain signal, and the preliminary echo cancelation frequency domain signal to an RES low-band module, and input the reference frequency domain signal and the preliminary echo cancelation frequency domain signal to an RES high-band module;

the RES high-band module, configured to perform envelope prediction echo suppression on a high-band signal in the preliminary echo cancelation frequency domain signal, and calculate and output a residual echo suppression coefficient; and

the RES low-band module, configured to perform echo suppression on a low-band signal in the preliminary echo cancelation frequency domain signal, and output a processing result.

The RES high-band module includes:

a module for calculating energy of each sub-band of a preliminary echo cancelation frequency domain signal, configured to calculate energy of each sub-band of the preliminary echo cancelation frequency domain signal and output the energy of each sub-band of the preliminary echo cancelation frequency domain signal to a sub-band gain calculation module;

a module for calculating energy of each sub-band of a reference frequency domain signal, configured to calculate energy of each sub-band of the reference frequency domain signal and output the energy of each sub-band of the reference frequency domain signal to the sub-band gain calculation module;

an IFFT transformation module, configured to perform IFFT transformation on a low-band echo filtering coefficient to generate a low-band impulse response of a time domain, and output the impulse response to a high-pass filtering module;

the high-pass filtering module, connected to the IFFT transformation module and configured to perform high-pass filtering processing on the low-band impulse response of the time domain to generate a high-band impulse response, and output the high-band impulse response to a high-band envelope prediction coefficient calculation module;

the high-band envelope prediction coefficient calculation module, connected to the high-pass filtering module and configured to calculate a high-band envelope prediction coefficient according to the high-band impulse response, and output the high-band envelope prediction coefficient to an EDC slope calculation module and the sub-band gain calculation module;

the EDC slope calculation module, connected to the high-band envelope prediction coefficient calculation module and configured to calculate an EDC slope and output the EDC slope to an attenuation factor calculation module;

the attenuation factor calculation module, connected to the EDC slope calculation module, and configured to calculate an attenuation factor according to the EDC slope, and output the attenuation factor to the sub-band gain calculation module;

the sub-band gain calculation module, connected to the module for calculating energy of each sub-band of a preliminary echo cancelation frequency domain signal, the module for calculating energy of each sub-band of a reference frequency domain signal, the high-band envelope prediction coefficient calculation module, and the attenuation factor calculation module, and configured to calculate a gain of a sub-band according to the energy of each sub-band of the preliminary echo cancelation frequency domain signal, the energy of each sub-band of the reference frequency domain signal, the high-band envelope prediction coefficient, and the attenuation factor, and output the gain of the sub-band to a module for calculating a gain of each spectral line of a high band; and

the module for calculating a gain of each spectral line of a high band, connected to the sub-band gain calculation module and configured to calculate a gain of each spectral line of a high band, namely, a residual echo suppression coefficient, according to the gain of the sub-band.

The device provided in the embodiments of the present invention divides a signal into a high-band signal and a low-band signal, uses an existing echo cancelation algorithm for the low-band signal, and uses an envelope prediction echo suppression algorithm for the high-band signal, thereby achieving an effect of greatly reducing calculation complexity, and at the same time, avoiding a problem of echo leakage on sub-band adaptive filtering edges. Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. An echo cancelation method, wherein the method comprises the following steps:

dividing a to-be-processed audio signal into a to-be-processed high-band audio signal ($d_{hi}(n)$) and a to-be-processed low-band audio signal ($d_{low}(n)$);

performing adaptive filtering echo cancelation processing on the to-be-processed low-band audio signal ($d_{low}(n)$), and skipping performing adaptive filtering echo cancelation processing on the to-be-processed high-band audio signal, to generate a preliminary echo cancelation signal($e_{low}(n)$); and

performing envelope prediction echo suppression on a high-band signal in a preliminary echo cancelation frequency domain signal which comprises subbands, and calculating and outputting a residual echo suppression coefficient, wherein the calculating a residual echo suppression coefficient comprises:

calculating energy ($E(i)$) of each sub-band of the preliminary echo cancelation frequency domain signal

($E(k)$), calculating energy ($U$(i)) of each sub-band of a reference frequency domain signal ($X(k)$), calculating energy $\widetilde{E}(i)$ of each sub-band of a residual echo frequency domain signal, calculating a high-band envelop prediction coefficient ($g_l$(i)), and calculating an attenuation factor of the high-band envelop prediction coefficient;

calculating a gain of each sub-band of a high-band signal in the preliminary echo cancelation frequency domain signal according to the energy of each sub-band of the preliminary echo cancelation frequency domain signal, the energy of each sub-band of the reference frequency domain signal, the energy of each sub-band of the residual echo frequency domain signal, the high-band signal envelop prediction coefficient in the preliminary echo cancelation frequency domain signal, and the attenuation factor of the high-band envelop prediction coefficient; and

calculating a gain ($G_{he}(k)$) of each spectral line of the high-band signal in the preliminary echo cancelation signal, namely, the residual echo suppression coefficient, according to the gain of each sub-band of the high-band signal in the preliminary echo cancelation signal;

performing, by using an RES module, echo suppression on a low-band signal in the preliminary echo cancelation frequency domain signal, and outputting a processing result; and multiplying the output result and the residual echo suppression coefficient, and outputting a signal of which echoes are canceled.

2. The echo cancelation method according to claim 1, wherein the dividing a to-be-processed audio signal is performed by using QMF analysis filtering.

3. The echo cancelation method according to claim 1, wherein the performing adaptive filtering echo cancelation processing on the to-be-processed low-band audio signal, and skipping performing adaptive filtering echo cancelation processing on the to-be-processed high-band audio signal, to generate a preliminary echo cancelation signal, comprises:

generating a low-band preliminary echo cancelation signal after the to-be-processed low-band audio signal undergoes the adaptive filtering processing; and

generating the preliminary echo cancelation signal after the low-band preliminary echo cancelation signal and the to-be-processed high-band audio signal undergo synthesis filtering.

4. The echo cancelation method according to claim 1 or 3, wherein the performing adaptive filtering echo cancelation processing on the to-be-processed low-band audio signal, and skipping performing adaptive filtering echo cancelation processing on the to-be-processed high-band audio signal, to generate a preliminary echo cancelation signal further comprises:

performing, by an AEC module, QMF analysis filtering on a reference audio signal to generate a high-band reference audio signal and a low-band reference audio signal;

performing, by the AEC module, adaptive filtering processing on the low-band reference audio signal to generate a low-band synthesis echo signal; and

performing, by the AEC module, QMF synthesis filtering processing on the high-band reference audio signal and the low-band synthesis echo signal to generate a synthesis echo signal.

5. The echo cancelation method according to claim 1, wherein before the performing envelope prediction echo suppression on a high-band signal in a preliminary echo cancelation frequency domain signal, the method further comprises:
generating the preliminary echo cancelation frequency domain signal after the preliminary echo cancelation signal undergoes FFT transformation.

6. The echo cancelation method according to claim 1, wherein the method for calculating a high-band signal envelop prediction coefficient in the preliminary echo cancelation frequency domain signal is:

$$g_l(i) = \sum_{n=l*N}^{l*N+N-1} h_n(i) * h_n(i),$$

calculating the envelop prediction coefficient according to a formula        wherein

$g_l(i)$ represents the envelope prediction coefficient, N represents a frame length, and

$h_n(i)$ represents an echo impulse response of each sub-band of the high-band signal in the preliminary echo cancelation frequency domain signal; and

a method for obtaining $h_n(i)$ is: performing IFFT transformation on a low-band echo filtering coefficient $H(k)$ to obtain a low-band impulse response of a time domain, and then performing high-pass filtering processing on the low-band impulse response to obtain a high-band impulse response $h_n(i)$.

7. The echo cancelation method according to claim 1, wherein the method for calculating energy of each sub-band is:

calculating energy of a sub-band of an early-stage echo, and calculating energy of a sub-band of a later-stage echo; and

adding the energy of the sub-band of the early-stage echo and the energy of the sub-band of the later-stage echo to obtain the energy of the sub-band.

8. The echo cancelation method according to claim 1, wherein a relationship between the high-band signal in the preliminary echo cancelation frequency domain signal and the low-band signal in the preliminary echo cancelation frequency domain signal is that the two overlaps to eliminate an aliasing effect.

9. The echo cancelation method according to any one of claims 1, 2, and 3, wherein before the dividing a to-be-processed audio signal into a to-be-processed high-band audio signal and a to-be-processed low-band audio signal, an audio collection device is used to collect the to-be-processed audio signal, wherein the to-be-processed audio signal comprises: an echo audio signal, a local end signal, and a noise signal.

10. An adaptive echo cancellation, AEC, module for echo cancelation, wherein the AEC module comprises:

a reference signal analysis filter, configured to process a reference signal ($X(n)$) into a high-band reference signal and a low-band reference signal ($X_{low}(n)$), output the high-band reference signal to an artificial echo synthesis filter, and output the low-band reference signal to an adaptive filter;

a to-be-processed audio signal analysis filter, configured to process a to-be-processed audio signal ($d(n)$) into a to-be-processed high-band audio signal and a to-be-processed low-band audio signal, output the to-be-processed high-band audio signal to a preliminary echo cancelation signal synthesis filter, and output the to-be-processed low-band audio signal to the adaptive filter;

the adaptive filter, connected to the reference signal analysis filter and a to-be-processed audio signal analysis filter, and configured to perform adaptive filtering processing on a low-band reference signal to generate the low-band artificial echo signal ($y'_{low}(n)$), and output the low-band artificial echo signal to the artificial echo synthesis filter; and perform adaptive filtering processing on a to-be-processed low-band audio signal to generate the low-band preliminary echo cancelation signal, and output the low-band preliminary echo cancelation signal to the preliminary echo cancelation signal synthesis filter;

the artificial echo synthesis filter, connected to the adaptive filter and configured to synthesize the high-band reference signal ($X_{hi}(n)$) and the low-band artificial echo signal ($y'_{low}(n)$) into the artificial echo signal, and output the artificial echo signal to an RES module; and

the preliminary echo cancelation signal synthesis filter, connected to the adaptive filter and configured to synthesize the to-be-processed high-band audio signal and the low-band preliminary echo cancelation signal into the preliminary echo cancelation signal, and output the preliminary echo cancelation signal to the RES module.

11. A residual echo suppression, RES, module for echo cancelation, wherein the RES module comprises:

an FFT transformation module, configured to perform FFT transformation on a reference signal, a to-be-processed audio signal ($d(n)$), an artificial echo signal ($y'(n)$), and a preliminary echo cancelation signal ($e(n)$), to generate a reference frequency domain signal ($X(k)$), a to-be-processed frequency domain audio signal, an artificial echo frequency domain signal, and a preliminary echo cancelation frequency domain signal ($E(k)$), respectively; and input the to-be-processed frequency domain audio signal, the artificial echo frequency domain signal, and the preliminary echo cancelation frequency domain signal to an RES low-band module, and input the reference frequency domain signal and the preliminary echo cancelation frequency domain signal to an RES high-band module;

the RES high-band module, configured to perform envelope prediction echo suppression on a high-band signal in the preliminary echo cancelation frequency domain signal ($E(k)$), and calculate and output a residual echo suppression coefficient;

the RES low-band module, configured to perform echo suppression on a low-band signal in the preliminary echo cancelation frequency domain signal, and output the processing result;

a module for calculating energy ($E(i)$) of each sub-band of a preliminary echo cancelation frequency domain signal ($E(n)$), configured to calculate energy ($U(i)$) of each sub-band of the preliminary echo cancelation frequency domain signal ($E(k)$) and output the energy of each sub-band of the preliminary echo cancelation frequency domain signal to a sub-band gain calculation module;

a module for calculating energy ($E(i)$) of each sub-band of a reference frequency domain signal, configured to calculate energy ($U(i)$) of each sub-band of the reference frequency domain signal ($X(k)$) and output the energy ($\tilde{E}(i)$) of each sub-band of the reference frequency domain signal to the sub-band gain calculation module; and

the module for calculating a gain ($G_{he}(k)$) of each spectral line of a high band, connected to the sub-band gain calculation module and configured to calculate a gain of each spectral line of a high band, namely, a residual echo suppression coefficient, according to the gain of the sub-band.

12. The RES module according to claim 11, wherein the RES high-band module comprises:

an IFFT transformation module, configured to perform IFFT transformation on a low-band echo filtering coefficient to generate a low-band impulse response of a time domain, and output the impulse response to a high-pass filtering module;

the high-pass filtering module, connected to the IFFT transformation module and configured to perform high-pass filtering processing on the low-band impulse response of the time domain to generate a high-band impulse response, and output the high-band impulse response to a high-band envelope prediction coefficient calculation module;

the high-band envelope prediction coefficient calculation module, connected to the high-pass filtering module and configured to calculate a high-band envelope prediction coefficient according to the high-band impulse response, and output the high-band envelope prediction coefficient to an EDC slope calculation module and the sub-band gain calculation module;

the EDC slope calculation module, connected to the high-band envelope prediction coefficient calculation module and configured to calculate an EDC slope and output the EDC slope to an attenuation factor calculation module;

the attenuation factor calculation module, connected to the EDC slope calculation module, and configured to calculate an attenuation factor according to the EDC slope, and output the attenuation factor to the sub-band gain calculation module;

the sub-band gain calculation module, connected to the module for calculating energy of each sub-band of a preliminary echo cancelation frequency domain signal, the module for calculating energy of each sub-band of a reference frequency domain signal, the high-band envelope prediction coefficient calculation module, and the attenuation factor calculation module, and configured to calculate a gain of a sub-band according to the energy of each sub-band of the preliminary echo cancelation frequency domain signal, the energy of each sub-band of the reference frequency domain signal, the high-band envelope prediction coefficient, and the attenuation factor, and output the gain of the sub-band to a module for calculating a gain of each spectral line of a high band.

**Patentansprüche**

1. Echounterdrückungsverfahren, wobei das Verfahren die folgenden Schritte umfasst:

Teilen eines zu verarbeitenden Audiosignals in ein zu verarbeitendes Hochbandaudiosignal ($d_{hi}(n)$) und ein zu verarbeitendes Niedrigbandaudiosignal ($d_{low}(n)$),

Durchführen einer adaptiven Echounterdrückungsfilterverarbeitung bei dem zu verarbeitenden Niedrigbandaudiosignal ($d_{low}(n)$) und Überspringen der Durchführung einer adaptiven Echounterdrückungsfilterverarbeitung bei dem zu verarbeitenden Hochbandaudiosignal, um ein vorläufiges Echounterdrückungssignal ($e_{low}(n)$) zu erzeugen; und

Durchführen einer Hüllkurvenvoraussage-Echounterdrückung bei einem Hochbandsignal in einem vorläufigen Echounterdrückungs-Frequenzbereichssignal, das Teilbänder umfasst, und Berechnen und Ausgeben eines Restechounterdrückungskoeffizienten, wobei das Berechnen eines Restechounterdrückungskoeffizienten umfasst:

Berechnen der Energie ($E(i)$) jedes Teilbands des vorläufigen Echounterdrückungs-Frequenzbereichssignals ($E(k)$), Berechnen der Energie ($U(i)$) jedes Teilbands eines Referenzfrequenzbereichssignals ($X(k)$), Berechnen der Energie ($\tilde{E}(i)$) jedes Teilbands eines Restecho-Frequenzbereichssignals, Berechnen eines

Hochband-Hüllkurven-Voraussagekoeffizienten ($g_l$(i)) und Berechnen eines Dämpfungsfaktors des Hochband-Hüllkurven-Voraussagekoeffizienten;

Berechnen einer Verstärkung jedes Teilbands eines Hochbandsignals in dem vorläufigen Echounterdrückungs-Frequenzbereichssignal gemäß der Energie jedes Teilbands des vorläufigen Echounterdrückungs-Frequenzbereichssignals, der Energie jedes Teilbands des Referenzfrequenzbereichssignals, der Energie jedes Teilbands des Restecho-Frequenzbereichssignals, des Hochbandsignal-Hüllkurven-Voraussagekoeffizienten in dem vorläufigen Echounterdrückungs-Frequenzbereichssignal und des Dämpfungsfaktors des Hochband-Hüllkurven-Voraussagekoeffizienten; und

Berechnen einer Verstärkung ($G_{he}$(k)) jeder Spektrallinie des Hochbandsignals in dem vorläufigen Echounterdrückungssignal, nämlich des Restechounterdrückungskoeffizienten, gemäß der Verstärkung jedes Teilbands des Hochbandsignals in dem vorläufigen Echounterdrückungssignal;

Durchführen, unter Verwendung eines RES-Moduls, der Echounterdrückung bei einem Niedrigbandsignal in dem vorläufigen Echounterdrückungs-Frequenzbereichssignal und Ausgeben eines Verarbeitungsergebnisses; und

Multiplizieren des Ausgabeergebnisses und des Restechounterdrückungskoeffizienten und Ausgeben eines Signals, dessen Echos unterdrückt sind.

2. Echounterdrückungsverfahren nach Anspruch 1, wobei das Teilen eines zu verarbeitenden Audiosignals unter Verwendung einer QMF-Analysefilterung durchgeführt wird.

3. Echounterdrückungsverfahren nach Anspruch 1, wobei das Durchführen einer adaptiven Echounterdrückungsfilterverarbeitung bei dem zu verarbeitenden Niedrigbandaudiosignal und das Überspringen des Durchführens einer adaptiven Echounterdrückungsfilterverarbeitung bei dem zu verarbeitenden Hochbandaudiosignal zum Erzeugen eines vorläufigen Echounterdrückungssignals umfassen:

Erzeugen eines vorläufigen Niedrigband-Echounterdrückungssignals, nachdem das zu verarbeitende Niedrigbandaudiosignal der adaptiven Filterverarbeitung unterzogen wird; und

Erzeugen des vorläufigen Echounterdrückungssignals, nachdem das vorläufige Niedrigband-Echounterdrückungssignal und das zu verarbeitende Hochbandaudiosignal einer Synthesefilterung unterzogen wurden.

4. Echounterdrückungsverfahren nach Anspruch 1 oder 3, wobei das Durchführen einer adaptiven Echounterdrückungsfilterverarbeitung bei dem zu verarbeitenden Niedrigbandaudiosignal und das Überspringen des Durchführens einer adaptiven Echounterdrückungsfilterverarbeitung bei dem zu verarbeitenden Hochbandaudiosignal zum Erzeugen eines vorläufigen Echounterdrückungssignals ferner umfassen:

Durchführen, durch ein AEC-Modul, einer QMF-Analysefilterung bei einem Referenzaudiosignal, um ein Hochband-Referenzaudiosignal und ein Niedrigband-Referenzaudiosignal zu erzeugen;

Durchführen, durch das AEC-Modul, einer adaptiven Filterverarbeitung bei dem Niedrigband-Referenzaudiosignal, um ein Niedrigband-Synthese-Echosignal zu erzeugen; und

Durchführen, durch das AEC-Modul, einer QMF-Synthese-Filterverarbeitung bei dem Hochband-Referenzaudiosignal und dem Niedrigband-Synthese-Echosignal, um ein Synthese-Echosignal zu erzeugen.

5. Echounterdrückungsverfahren nach Anspruch 1, wobei das Verfahren vor dem Durchführen der Hüllkurvenvoraussage-Echounterdrückung bei einem Hochbandsignal in einem vorläufigen Echounterdrückungs-Frequenzbereichssignal ferner umfasst:

Erzeugen des vorläufigen Echounterdrückungs-Frequenzbereichssignals, nachdem das vorläufige Echounterdrückungssignal einer FFT-Transformation unterzogen wurde.

6. Echounterdrückungsverfahren nach Anspruch 1, wobei das Verfahren zum Berechnen eines Hochbandsignal-Hüllkurven-Voraussagekoeffizienten in dem vorläufigen Echounterdrückungs-Frequenzbereichssignal ist:

Berechnen des Hüllkurven-Voraussagekoeffizienten nach einer Formel

$$g_l(i) = \sum_{n=l*N}^{l*N+N-1} h_n(i) * h_n(i)$$

wobei $g_l$(i) den Hüllkurven-Voraussagekoeffizienten darstellt, N eine

Rahmenlänge darstellt, und $h_n(i)$ eine Echoimpulsantwort jedes Teilbands des Hochbandsignals in dem vorläufigen Echounterdrückungs-Frequenzbereichssignal darstellt; und

ein Verfahren zum Erhalten von $h_n(i)$ ist: Durchführen einer IFFT-Transformation bei einem Niedrigband-Echofilterkoeffizienten $H(k)$, um eine Niedrigbandimpulsantwort eines Zeitbereichs zu erhalten, und dann Durchführen einer Hochpassfilterverarbeitung bei der Niedrigbandimpulsantwort, um eine Hochbandimpulsantwort $h_n(i)$ zu erhalten.

7. Echounterdrückungsverfahren nach Anspruch 1, wobei das Verfahren zum Berechnen der Energie jedes Teilbands ist:

Berechnen der Energie eines Teilbands eines Echos der frühen Stufe und Berechnen der Energie eines Teilbands eines Echos einer späteren Stufe; und
Addieren der Energie des Teilbands des Echos der frühen Stufe und der Energie des Teilbands des Echos der späteren Stufe, um die Energie des Teilbands zu erhalten.

8. Echounterdrückungsverfahren nach Anspruch 1, wobei eine Beziehung zwischen dem Hochbandsignal in dem vorläufigen Echounterdrückungs-Frequenzbereichssignal und dem Niedrigbandsignal in dem vorläufigen Echounterdrückungs-Frequenzbereichssignal ist, dass die beiden sich überlappen, um einen Aliasing-Effekt zu beseitigen.

9. Echounterdrückungsverfahren nach einem der Ansprüche 1, 2 und 3, wobei vor dem Teilen eines zu verarbeitenden Audiosignals in ein zu verarbeitendes Hochbandaudiosignal und ein zu verarbeitendes Niedrigbandaudiosignal eine Audiosammelvorrichtung verwendet wird, um das zu verarbeitende Audiosignal zu sammeln, wobei das zu verarbeitende Audiosignal umfasst: ein Echoaudiosignal, ein lokales Endsignal und ein Rauschsignal.

10. Adaptives Echounterdrückungs(Adaptive Echo Cancellation, AEC)-Modul zur Echounterdrückung, wobei das AEC-Modul umfasst:

einen Referenzsignal-Analysefilter, der konfiguriert ist, um ein Referenzsignal ($X(n)$) in ein Hochbandreferenzsignal und ein Niedrigbandreferenzsignal ($X_{low}(n)$) zu verarbeiten, das Hochbandreferenzsignal an einen künstlichen Echosynthesefilter auszugeben und das Niedrigbandreferenzsignal an einen adaptiven Filter auszugeben;
einen Analysefilter für das zu verarbeitende Audiosignal, der konfiguriert ist, um ein zu verarbeitendes Audiosignal ($d(n)$) in ein zu verarbeitendes Hochbandaudiosignal und ein zu verarbeitendes Niedrigbandaudiosignal zu verarbeiten, das zu verarbeitende Hochbandaudiosignal an einen Synthesefilter für das vorläufige Echounterdrückungssignal auszugeben und das zu verarbeitende Niedrigbandaudiosignal an den adaptiven Filter auszugeben;
den adaptiven Filter, der mit dem Referenzsignal-Analysefilter und einem Analysefilter für das zu verarbeitende Audiosignal verbunden und konfiguriert ist,
um eine adaptive Filterverarbeitung bei einem Niedrigbandreferenzsignal durchzuführen, um das künstliche Niedrigband-Echosignal ($y'_{low}(n)$) zu erzeugen und
das künstliche Niedrigband-Echosignal an den künstlichen Echosynthesefilter auszugeben; und eine adaptive Filterverarbeitung an einem zu verarbeitenden Niedrigbandaudiosignal durchzuführen, um das vorläufige Niedrigband-Echounterdrückungssignal zu erzeugen und das vorläufige Niedrigband-Echounterdrückungssignal an den Synthesefilter für das vorläufige Echounterdrückungssignal auszugeben;
den künstlichen Echosynthesefilter, der mit dem adaptiven Filter verbunden und konfiguriert ist, um das Hochbandreferenzsignal ($X_{hi}(n)$) und das künstliche Niedrigband-Echosignal ($y'_{low}(n)$) in das künstliche Echosignal zu synthetisieren und das künstliche Echosignal an ein RES-Modul auszugeben; und
den Synthesefilter für das vorläufige Echounterdrückungssignal, der mit dem adaptiven Filter verbunden und konfiguriert ist, um das zu verarbeitende Hochbandaudiosignal und das vorläufige Niedrigband-Echounterdrückungssignal in das vorläufige Echounterdrückungssignal zu synthetisieren und das vorläufige Echounterdrückungssignal an das RES-Modul auszugeben.

11. Restechounterdrückungs(Residual Echo Suppression, RES)-Modul zur Echounterdrückung, wobei das RES-Modul umfasst:

ein FFT-Transformationsmodul, das konfiguriert ist, um eine FFT-Transformation bei einem Referenzsignal, einem zu verarbeitenden Audiosignal ($d(n)$), einem künstlichen Echosignal ($y'(n)$) und einem vorläufigen Echounterdrückungssignal (e(n)) durchzuführen, um jeweils ein Referenzfrequenzbereichssignal (X(k)), ein zu verarbeitendes Frequenzbereichs-Audiosignal, ein künstliches Echofrequenzbereichssignal und ein vorläufiges Echounterdrückungs-Frequenzbereichssignal (E(k)) zu erzeugen; und das zu verarbeitende Frequenzbereichs-Audiosignal, das künstliche Echofrequenzbereichssignal und das vorläufige Echounterdrückungs-Frequenzbereichssignal in ein RES-Niedrigbandmodul einzugeben und das Referenzfrequenzbereichssignal und das vorläufige Echounterdrückungs-Frequenzbereichssignal in ein RES-Hochbandmodul einzugeben;

das RES-Hochbandmodul, das konfiguriert ist, um eine Hüllkurvenvoraussage-Echounterdrückung bei einem Hochbandsignal in dem vorläufigen Echounterdrückungs-Frequenzbereichssignal (E(k)) durchzuführen und einen Restechounterdrückungskoeffizienten zu berechnen und auszugeben; das RES-Niedrigbandmodul, das konfiguriert ist, um die Echounterdrückung bei einem Niedrigbandsignal in dem vorläufigen Echounterdrückungs-Frequenzbereichssignal durchzuführen und das Verarbeitungsergebnis auszugeben;

ein Modul zum Berechnen der Energie (E(i)) jedes Teilbands eines vorläufigen Echounterdrückungs-Frequenzbereichssignals (E(n)), das konfiguriert ist, um die Energie (U(i)) jedes Teilbands des vorläufigen Echounterdrückungs-Frequenzbereichssignals (E(k)) zu berechnen und die Energie jedes Teilbands des vorläufigen Echounterdrückungs-Frequenzbereichssignals an ein Teilband-Verstärkungsberechnungsmodul auszugeben;

ein Modul zum Berechnen der Energie ($E(i)$) jedes Teilbands eines Referenzfrequenzbereichssignals, das konfiguriert ist, um die Energie (U(i)) jedes Teilbands des Referenzfrequenzbereichssignals (X(k)) zu berechnen und die Energie ($\tilde{E}(i)$) jedes Teilbands des Referenzfrequenzbereichssignals an das Teilband-Verstärkungsberechnungsmodul auszugeben; und

das Modul zum Berechnen einer Verstärkung ($G_{he}(k)$) jeder Spektrallinie eines Hochbands, das mit dem Teilband-Verstärkungsberechnungsmodul verbunden und konfiguriert ist, um eine Verstärkung jeder Spektrallinie eines Hochbands, nämlich einen Restechounterdrückungskoeffizienten, gemäß der Verstärkung des Teilbands zu berechnen.

12. RES-Modul nach Anspruch 11, wobei das RES-Hochbandmodul umfasst:

ein IFFT-Transformationsmodul, das konfiguriert ist, um eine IFFT-Transformation bei einem Niedrigband-Echofilterkoeffizienten durchzuführen, um eine Niedrigbandimpulsantwort eines Zeitbereichs zu erzeugen und die Impulsantwort an ein Hochpassfiltermodul auszugeben;

das Hochpassfiltermodul, das mit dem IFFT-Transformationsmodul verbunden und konfiguriert ist, um eine Hochpassfilterverarbeitung bei der Niedrigbandimpulsantwort des Zeitbereichs durchzuführen, um eine Hochbandimpulsantwort zu erzeugen und die Hochbandimpulsantwort an ein Hochband-Hüllkurven-Voraussagekoeffizienten-Berechnungsmodul auszugeben;

das Hochband-Hüllkurven-Voraussagekoeffizienten-Berechnungsnodul, das mit dem Hochpassfiltermodul verbunden und konfiguriert ist, um einen Hochband-Hüllkurven-Voraussagekoeffizienten gemäß der Hochbandimpulsantwort zu berechnen und den Hochband-Hüllkurven-Voraussagekoeffizienten an ein EDC-Steigungsberechnungsmodul und das Teilband-Verstärkungsberechnungsmodul auszugeben;

das EDC-Steigungsberechnungsmodul, das mit dem Hochband-Hüllkurven-Voraussagekoeffizienten-Berechnungsmodul verbunden und konfiguriert ist, um eine EDC-Steigung zu berechnen und die EDC-Steigung an ein Dämpfungsfaktorberechnungsmodul auszugeben;

das Dämpfungsfaktorberechnungsmodul, das mit dem EDC-Steigungsberechnungsmodul verbunden und konfiguriert ist, um einen Dämpfungsfaktor gemäß der EDC-Steigung zu berechnen und den Dämpfungsfaktor an das Teilband-Verstärkungsberechnungsmodul auszugeben;

das Teilband-Verstärkungsberechnungsmodul, das mit dem Modul zum Berechnen der Energie jedes Teilbands eines vorläufigen Echounterdrückungs-Frequenzbereichssignals, dem Modul zum Berechnen der Energie jedes Teilbands eines Referenzfrequenzbereichssignals, dem Hochband-Hüllkurven-Voraussagekoeffizienten-Berechnungsmodul und dem Dämpfungsfaktorberechnungsmodul verbunden und konfiguriert ist, um eine Verstärkung eines Teilbands gemäß der Energie jedes Teilbands des vorläufigen Echounterdrückungs-Frequenzbereichssignals, der Energie jedes Teilbands des Referenzfrequenzbereichssignals, dem Hochband-Hüllkurven-Voraussagekoeffizienten und dem Dämpfungsfaktor zu berechnen und die Verstärkung des Teilbands an ein Modul zum Berechnen einer Verstärkung jeder Spektrallinie eines Hochbands auszugeben.

**Revendications**

1. Procédé d'annulation d'écho, le procédé comprenant les étapes suivantes consistant à :

diviser un signal audio à traiter en un signal audio en bande haute à traiter ($d_{hi}(n)$) et un signal audio en bande basse à traiter ($d_{low}(n)$) ;

réaliser un traitement d'annulation d'écho par filtrage adaptatif sur le signal audio en bande basse à traiter ($d_{low}(n)$), et omettre un traitement d'annulation d'écho par filtrage adaptatif sur le signal audio en bande haute à traiter, afin de générer un signal d'annulation d'écho préliminaire ($e_{low}(n)$) ; et

réaliser une suppression d'écho par prévision d'enveloppe sur un signal en bande haute dans un signal en domaine fréquentiel d'annulation d'écho préliminaire qui comprend des sous-bandes, et calculer et fournir un coefficient de suppression d'écho résiduel, le calcul d'un coefficient de suppression d'écho résiduel consistant à :

calculer une énergie ($E(i)$) de chaque sous-bande du signal en domaine fréquentiel d'annulation d'écho préliminaire ($E(k)$), calculer une énergie ($U(i)$) de chaque sous-bande d'un signal en domaine fréquentiel de référence ($X(k)$), calculer une énergie ($\tilde{E}(i)$) de chaque sous-bande d'un signal en domaine fréquentiel d'écho résiduel, calculer un coefficient de prévision d'enveloppe en bande haute ($g_l(i)$), et calculer un facteur d'atténuation du coefficient du coefficient de prévision d'enveloppe en bande haute ;

calculer un gain de chaque sous-bande d'un signal en bande haute dans le signal en domaine fréquentiel d'annulation d'écho préliminaire selon l'énergie de chaque sous-bande du signal en domaine fréquentiel d'annulation d'écho préliminaire, l'énergie de chaque sous-bande du signal en domaine fréquentiel de référence, l'énergie de chaque sous-bande du signal en domaine fréquentiel d'écho résiduel, le coefficient de prévision d'enveloppe de signal en bande haute dans le signal en domaine fréquentiel d'annulation d'écho préliminaire, et le facteur d'atténuation du coefficient de prévision d'enveloppe en bande haute ; et

calculer un gain ($G_{he}(k)$) de chaque ligne spectrale du signal en bande haute dans le signal d'annulation d'écho préliminaire, à savoir, le coefficient de suppression d'écho résiduel, selon le gain de chaque sous-bande du signal en bande haute dans le signal d'annulation d'écho préliminaire ;

réaliser, au moyen d'un module RES, une suppression d'écho sur un signal en bande basse dans le signal en domaine fréquentiel d'annulation d'écho préliminaire, et fournir un résultat de traitement ; et multiplier le résultat fourni et le coefficient de suppression d'écho résiduel, et fournir un signal dont les échos sont annulés.

2. Procédé d'annulation d'écho selon la revendication 1, dans lequel la division d'un signal audio à traiter est réalisée au moyen d'un filtrage par analyse QMF.

3. Procédé d'annulation d'écho selon la revendication 1, dans lequel la réalisation d'un traitement d'annulation d'écho par filtrage adaptatif sur le signal audio en bande basse à traiter, et l'omission d'un traitement d'annulation d'écho par filtrage adaptatif sur le signal audio en bande haute à traiter, afin de générer un signal d'annulation d'écho préliminaire, consistent à :

générer un signal d'annulation d'écho préliminaire en bande basse après le traitement par filtrage adaptatif du signal audio en bande basse à traiter ; et

générer le signal d'annulation d'écho préliminaire après le filtrage de synthèse du signal d'annulation d'écho préliminaire en bande basse et du signal audio en bande haute à traiter.

4. Procédé d'annulation d'écho selon la revendication 1 ou 3, dans lequel la réalisation d'un traitement d'annulation d'écho par filtrage adaptatif sur le signal audio en bande basse à traiter, et l'omission d'un traitement d'annulation d'écho par filtrage adaptatif sur le signal audio en bande haute à traiter, afin de générer un signal d'annulation d'écho préliminaire, consistent en outre à :

réaliser, par un module AEC, un filtrage par analyse QMF sur un signal audio de référence afin de générer un signal audio de référence en bande haute et un signal audio de référence en bande basse ;

réaliser, par le module AEC, un traitement par filtrage adaptatif sur le signal audio de référence en bande basse afin de générer un signal d'écho de synthèse en bande basse ; et

réaliser, par le module AEC, un traitement par filtrage par synthèse QMF sur le signal audio de référence en bande haute et le signal d'écho de synthèse en bande basse afin de générer un signal d'écho de synthèse.

5. Procédé d'annulation d'écho selon la revendication 1, le procédé consistant en outre, avant la réalisation d'une suppression d'écho par prévision d'enveloppe sur un signal en bande haute dans un signal en domaine fréquentiel d'annulation d'écho préliminaire, à :

générer le signal en domaine fréquentiel d'annulation d'écho préliminaire après la transformation FFT du signal d'annulation d'écho préliminaire.

**6.** Procédé d'annulation d'écho selon la revendication 1, dans lequel le procédé de calcul d'un coefficient de prévision d'enveloppe de signal en bande haute dans le signal en domaine fréquentiel d'annulation d'écho préliminaire consiste à :

calculer le coefficient de prévision d'enveloppe selon une formule $g_l(i) = \sum_{n=l*N}^{l*N+N-1} h_n(i) * h_n(i),$ où

$g_l(i)$ représente le coefficient de prévision d'enveloppe, N représente une longueur de trame, et $h_n(i)$ représente une réponse impulsionnelle d'écho de chaque sous-bande du signal en bande haute dans le signal en domaine fréquentiel d'annulation d'écho préliminaire ; et

un procédé d'obtention de $h_n(i)$ consiste à : réaliser une transformation IFFT sur un coefficient de filtrage d'écho en bande basse $H(k)$ afin d'obtenir une réponse impulsionnelle en bande basse d'un domaine temporel, puis réaliser un traitement par filtrage passe-haut sur la réponse impulsionnelle en bande basse afin d'obtenir une réponse impulsionnelle en bande haute $h_n(i)$.

**7.** Procédé d'annulation d'écho selon la revendication 1, dans lequel le procédé de calcul d'une énergie de chaque sous-bande consiste à :

calculer une énergie d'une sous-bande d'un écho à un stade précoce, et calculer une énergie d'une sous-bande d'un écho à un stade ultérieur ; et

ajouter l'énergie de la sous-bande de l'écho à un stade précoce et l'énergie de la sous-bande de l'écho à un stade ultérieur afin d'obtenir l'énergie de la sous-bande.

**8.** Procédé d'annulation d'écho selon la revendication 1, dans lequel il existe une relation de superposition entre le signal en bande haute dans le signal en domaine fréquentiel d'annulation d'écho préliminaire et le signal en bande basse dans le signal en domaine fréquentiel d'annulation d'écho préliminaire afin d'éliminer un effet de crénelage.

**9.** Procédé d'annulation d'écho selon l'une quelconque des revendications 1, 2 et 3, dans lequel, avant la division d'un signal audio à traiter en un signal audio en bande haute à traiter et un signal audio en bande basse à traiter, un dispositif de collecte audio est utilisé pour collecter le signal audio à traiter, le signal audio à traiter comprenant : un signal audio d'écho, un signal d'ensemble terminal et un signal de bruit.

**10.** Module d'annulation d'écho adaptative (AEC) pour l'annulation d'un écho, le module AEC comprenant :

un filtre d'analyse de signal de référence, conçu pour traiter un signal de référence ($X(n)$) en un signal de référence en bande haute et un signal de référence en bande basse ($X_{low}(n)$), émettre le signal de référence en bande haute vers un filtre de synthèse d'écho artificiel, et émettre le signal de référence en bande basse vers un filtre adaptatif ;

un filtre d'analyse de signal audio à traiter, conçu pour traiter un signal audio à traiter ($d(n)$) en un signal audio en bande haute à traiter et un signal audio en bande basse à traiter, émettre le signal audio en bande haute à traiter vers un filtre de synthèse de signal d'annulation d'écho préliminaire, et émettre le signal audio en bande basse à traiter vers le filtre adaptatif ;

le filtre adaptatif, connecté au filtre d'analyse de signal de référence et à un filtre d'analyse de signal audio à traiter, et conçu pour réaliser un traitement par filtrage adaptatif sur un signal de référence en bande basse pour générer le signal d'écho artificiel en bande basse ($y'_{low}(n)$), et émettre le signal d'écho artificiel en bande basse vers le filtre de synthèse d'écho artificiel ; et réaliser un traitement par filtrage adaptatif sur un signal audio en bande basse à traiter pour générer le signal d'annulation d'écho préliminaire en bande basse, et émettre le signal d'annulation d'écho préliminaire en bande basse vers le filtre de synthèse de signal d'annulation d'écho préliminaire ;

le filtre de synthèse d'écho artificiel, connecté au filtre adaptatif et conçu pour synthétiser le signal de référence en bande haute ($X_{hi}(n)$) et le signal d'écho artificiel en bande basse ($y'_{low}(n)$) en le signal d'écho artificiel, et émettre le signal d'écho artificiel vers un module RES ; et

le filtre de synthèse de signal d'annulation d'écho préliminaire, connecté au filtre adaptatif et conçu pour synthétiser le signal audio en bande haute à traiter et le signal d'annulation d'écho préliminaire en bande basse en le signal d'annulation d'écho préliminaire, et émettre le signal d'annulation d'écho préliminaire vers le module RES.

**11.** Module de suppression d'écho résiduel (RES) pour l'annulation d'un écho, le module RES comprenant :

un module de transformation FFT, conçu pour réaliser une transformation FFT sur un signal de référence, un signal audio à traiter ($d(n)$), un signal d'écho artificiel ($y'(n)$) et un signal d'annulation d'écho préliminaire ($e(n)$), afin de générer respectivement un signal en domaine fréquentiel de référence ($X(k)$), un signal audio en domaine fréquentiel à traiter, un signal en domaine fréquentiel d'écho artificiel, et un signal en domaine fréquentiel d'annulation d'écho préliminaire ($E(k)$) ; et entrer le signal audio en domaine fréquentiel à traiter, le signal en domaine fréquentiel d'écho artificiel et

le signal en domaine fréquentiel d'annulation d'écho préliminaire dans un module en bande basse RES, et entrer le signal en domaine fréquentiel de référence et le signal en domaine fréquentiel d'annulation d'écho préliminaire dans un module en bande haute RES ;

le module en bande haute RES, conçu pour réaliser une suppression d'écho par prévision d'enveloppe sur un signal en bande haute dans le signal en domaine fréquentiel d'annulation d'écho préliminaire ($E(k)$), et calculer et fournir un coefficient de suppression d'écho résiduel ;

le module en bande basse RES, conçu pour réaliser une suppression d'écho sur un signal en bande basse dans le signal en domaine fréquentiel d'annulation d'écho préliminaire, et fournir le résultat de traitement ;

un module de calcul d'une énergie ($E(i)$) de chaque sous-bande d'un signal en domaine fréquentiel d'annulation d'écho préliminaire ($E(n)$), conçu pour calculer une énergie ($U(i)$) de chaque sous-bande du signal en domaine fréquentiel d'annulation d'écho préliminaire ($E(k)$), et fournir l'énergie de chaque sous-bande du signal en domaine fréquentiel d'annulation d'écho préliminaire à un module de calcul de gain de sous-bande ;

un module de calcul d'une énergie ($E(i)$) de chaque sous-bande d'un signal en domaine fréquentiel de référence, conçu pour calculer une énergie ($U(i)$) de chaque sous-bande du signal en domaine fréquentiel de référence ($X(k)$), et fournir l'énergie ($\tilde{E}(i)$) de chaque sous-bande du signal en domaine fréquentiel de référence au module de calcul de gain de sous-bande ; et

le module de calcul d'un gain ($G_{he}(k)$) de chaque ligne spectrale d'une bande haute, connecté au module de calcul de gain de sous-bande et conçu pour calculer un gain de chaque ligne spectrale d'une bande haute, à savoir un coefficient de suppression d'écho résiduel, selon le gain de la sous-bande.

**12.** Module RES selon la revendication 11, dans lequel le module en bande haute RES comprend :

un module de transformation IFFT, conçu pour réaliser une transformation IFFT sur un coefficient de filtrage d'écho en bande basse afin de générer une réponse impulsionnelle en bande basse d'un domaine temporel, et fournir la réponse impulsionnelle à un module de filtrage passe-haut ;

le module de filtrage passe-haut, connecté au module de transformation IFFT et conçu pour réaliser un traitement par filtrage passe-haut sur la réponse impulsionnelle en bande basse du domaine temporel afin de générer une réponse impulsionnelle en bande haute, et fournir la réponse impulsionnelle en bande haute à un module de calcul de coefficient de prévision d'enveloppe en bande haute ;

le module de calcul de coefficient de prévision d'enveloppe en bande haute, connecté au module de filtrage passe-haut et conçu pour calculer un coefficient de prévision d'enveloppe en bande haute selon la réponse impulsionnelle en bande haute, et fournir le coefficient de prévision d'enveloppe en bande haute à un module de calcul de pente EDC et au module de calcul de gain de sous-bande ;

le module de calcul de pente EDC, connecté au module de calcul de coefficient de prévision d'enveloppe en bande haute, et conçu pour calculer une pente EDC et fournir la pente EDC à un module de calcul de facteur d'atténuation ;

le module de calcul de facteur d'atténuation, connecté au module de calcul de pente EDC et conçu pour calculer un facteur d'atténuation selon la pente EDC, et fournir le facteur d'atténuation au module de calcul de gain de sous-bande ;

le module de calcul de gain de sous-bande, connecté au module de calcul d'une énergie de chaque sous-bande d'un signal en domaine fréquentiel d'annulation d'écho préliminaire, au module de calcul d'une énergie de chaque sous-bande d'un signal en domaine fréquentiel de référence, au module de calcul de coefficient de prévision d'enveloppe en bande haute, et au module de calcul de facteur d'atténuation, et conçu pour calculer un gain d'une sous-bande selon l'énergie de chaque sous-bande du signal en domaine fréquentiel d'annulation d'écho préliminaire, l'énergie de chaque sous-bande du signal en domaine fréquentiel de référence, le coefficient de prévision d'enveloppe en bande haute et le facteur d'atténuation, et fournir le gain de la sous-bande à un module de calcul d'un gain de chaque ligne spectrale d'une bande haute.

EP 2 905 778 B1

FIG. 1

FIG. 2

FIG. 3

FIG. 4

FIG. 5

FIG. 6

23

FIG. 7

(a)

(b)

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006098810 A1